(19) Europäisches Patentamt
European Patent Office
Office européen des brevets

(11) **EP 3 564 706 A1**

(12) **EUROPÄISCHE PATENTANMELDUNG**

(43) Veröffentlichungstag:
**06.11.2019 Patentblatt 2019/45**

(51) Int Cl.:
**G01S 11/02** *(2010.01)*    **G01S 13/84** *(2006.01)*

(21) Anmeldenummer: **18171965.9**

(22) Anmeldetag: **12.05.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **04.05.2018 EP 18170949**

(71) Anmelder: **Lambda: 4 Entwicklungen GmbH**
**22767 Hamburg (DE)**

(72) Erfinder: **Reimann, Rönne**
**22769 Hamburg (DE)**

(74) Vertreter: **Raffay & Fleck**
**Patentanwälte**
**Grosse Bleichen 8**
**20354 Hamburg (DE)**

(54) **VERFAHREN UND SYSTEM ZUR HOCHAUFLÖSENDEN ENTFERNUNGS- UND GESCHWINDIGKEITSMESSUNG**

(57)    Die vorliegende Erfindung betrifft ein Verfahren und ein System zur hoch auflösenden Entfernungsmessung zwischen zwei Objekten mittels elektromagnetischer Wellen.

Aufgabe der vorliegenden Erfindung ist es, derartige Systeme und Verfahren dahin gehend weiter zu entwickeln, dass Messungen auch in komplizierten Mulitpathumgebungen und/oder bei bewegten Objekten zuverlässig, einfach, schnell, mit geringer Bandbreite und mit hoher Genauigkeit möglich sind.

Gelöst wird die Aufgabe durch die Ermittlung einer vermeintlichen Entfernung und/oder vermeintlichen relativen Geschwindigkeit zwischen erstem und zweitem Objekt aus einem Messwertobjekt durch Vergleich des Messwertobjekts mit einer Menge und/oder Auswahl gespeicherter und/oder errechneter Referenzmesswertobjekte, wobei das Messwertobjekt jeweils eine Phaseninformation und Amplitude von zwischen den Objekten übertragenen elektromagnetischen Signalen umfasst. Die Referenzmesswertobjekte betreffen dabei unterschiedliche Entfernungen und unterschiedliche relative Geschwindigkeiten, wobei jedes Referenzmesswertobjekt einer Entfernung und einer Geschwindigkeit zugeordnet ist.

Als die vermeintliche Entfernung und/oder Geschwindigkeit wird die Entfernung und/oder Geschwindigkeit angenommen, die dem gespeicherten und/oder errechneten Referenzmesswertobjekt zugeordnet ist, das am besten zu dem Messwertobjekt passt, den geringsten Abstand zu ihm aufweist und/oder diesem am ähnlichsten ist.

Fig. 1

**Beschreibung**

Die vorliegende Erfindung betrifft ein Verfahren und ein System zur hochauflösenden Entfernungs- und/oder Geschwindigkeitsmessung mittels elektromagnetischer Wellen.

Systeme und Verfahren zur Entfernungsmessung sind zahlreich bekannt, beispielsweise aus der EP 2196823.

Aufgabe der vorliegenden Erfindung ist es, derartige Systeme und Verfahren dahin gehend weiter zu entwickeln, dass Entfernungsmessungen auch in komplizierten Mulitpathumgebungen und/oder bei bewegten Objekten zuverlässig, einfach, schnell, mit geringer Bandbreite und mit hoher Genauigkeit möglich sind.

Auch ist es Aufgabe, die Bestimmung von, insbesondere niedrigen, relativen Geschwindigkeiten bei beschränkter Bandbreite der Signalübertragung und/oder der Analyse mit hoher Genauigkeit zu bestimmen, möglichst gemeinsam mit der Entfernung.

Dies wird gelöst durch ein Verfahren nach Anspruch 1 und ein System nach Anspruch 15. Die Unteransprüche geben vorteilhafte Weiterbildungen an.

Insbesondere wird das erfindungsgemäße Verfahren mit einem erfindungsgemäßen System durchgeführt und/oder ist das erfindungsgemäße System eingerichtet, ein erfindungsgemäßes Verfahren durchzuführen.

Gelöst wir die Aufgabe durch ein Verfahren zur hochauflösenden Bestimmung einer Entfernung zwischen einem ersten Objekt und einem zweiten Objekt, mittels zwischen dem ersten und dem zweiten Objekt übertragender elektromagnetischer Signale, umfassend

vielfaches Ausführen der folgenden Schritte a bis d mit unterschiedlichen ersten und unterschiedlichen zweiten Frequenzen:

a. Senden eines ersten Signals mit einer ersten Frequenz vom ersten Objekt aus mit mindestens einer ersten Antenne

b. Empfangen des ersten Signals am zweiten Objekt mit mindestens einer zweiten Antennen

c. Senden eines zweiten Signals mit einer zweiten Frequenz vom zweiten Objekt aus mit mindestens einer, insbesondere der mindestens einen zweiten, Antenne

d. Empfangen des zweiten Signals am ersten Objekt mit mindestens einer, insbesondere der mindestens einen ersten, Antenne.

Dabei werden bei den vielfachen Ausführungen, die insbesondere mindestens ein fünffaches Ausführen darstellen, insbesondere mindestens zwei, insbesondere mindestens fünf, unterschiedliche zweite Frequenzen und insbesondere mindestens zwei, insbesondere mindestens fünf, unterschiedliche erste Frequenzen eingesetzt. Die mindestens zwei, insbesondere mindestens fünf, insbesondere die ersten und/oder zweiten Frequenzen liegen insbesondere im Bereich von 400 MHz bis 8 GHz und/oder innerhalb einer Bandbreite von maximal 200 MHz, insbesondere maximal 100MHz. Der kleinste Abstand zwischen zwei, insbesondere allen, der mindestens zwei, insbesondere mindestens fünf, insbesondere den, frequenzmäßig und/oder in der zeitlichen Abfolge benachbarten ersten Frequenzen beträgt insbesondere mindestens 25kHz. Der kleinste Abstand zwischen je zwei, insbesondere allen, der mindestens zwei, insbesondere mindestens fünf, insbesondere den, frequenzmäßig und/oder in der zeitlichen Abfolge benachbarten zweiten Frequenzen beträgt insbesondere mindestens 25kHz. Der größte Abstand zwischen zwei, insbesondere allen, der mindestens zwei, insbesondere mindestens fünf, insbesondere den, frequenzmäßig und/oder in der zeitlichen Abfolge benachbarten ersten Frequenzen beträgt insbesondere maximal 10MHz. Der größte Abstand zwischen zwei, insbesondere allen, der mindestens zwei, insbesondere mindestens fünf, insbesondere den, frequenzmäßig und/oder in der zeitlichen Abfolge benachbarten zweiten Frequenzen beträgt insbesondere maximal 10MHz.

Insbesondere wird das Verfahren so durchgeführt, dass die Zeit zwischen Schritt b und Schritt c mindestens 5 mal so lang ist wie die Zeit zwischen Schritt a und Schritt b und/oder dass die Zeit zwischen Schritt c und Schritt d mindestens 5 mal so lang ist wie die Zeit zwischen Schritt b und Schritt c.

Insbesondere wird das Verfahren so durchgeführt, dass die Zeit zwischen Schritt d und Schritt a der folgenden Ausführung mindestens 5 mal so lang ist wie die Zeit zwischen Schritt a und Schritt b und/oder die Zeit zwischen Schritt d und Schritt a der folgenden Ausführung mindestens 5 mal so lang ist wie die Zeit zwischen Schritt c und Schritt d.

Die vielfachen Ausführungen können dabei nacheinander und/oder vollständig oder teilweise zeitgleich durchgeführt werden. Insbesondere ist ihr Abstand kleiner gleich einer Sekunde, insbesondere kleiner gleich 100ms. Insbesondere werden mindestens fünf Ausführung der Schritte a bis d innerhalb von maximal fünf Sekunden, insbesondere innerhalb von maximal 100ms, durchgeführt

Das Verfahren beinhaltet auch das Bereitstellen mindestens einer aus und/oder mittels mindestens einer ermittelten Phasenlage des empfangen ersten Signals ermittelten ersten Phaseninformation je erstem Signal und/oder je Ausführung der Schritte a bis d und das Bereitstellen mindestens einer aus und/oder mittels mindestens einer ermittelten Phasenlage des empfangen zweiten Signals ermittelten zweiten Phaseninformation je zweitem Signal und/oder je Ausführung der Schritte a bis d.

Zur Ermittlung der Phasenlage wird das empfangene Signal insbesondere mit oder auf eine(r) Zwischenfrequenz gemischt. Die Zwischenfrequenz beträgt insbesondere 0 Hz.

Das Verfahren beinhaltet auch das Bilden eines Messwertobjekts aus den ersten und zweiten Phaseninformationen und je erster und/oder zweiter Phaseninformation mindestens einer Amplitude.

Mit Vorteil wird jede erste Phaseninformation gewonnen durch Berechnen einer ersten theoretischen Phasenlage am zweiten Objekt zu einem ersten fiktiven Zeitpunkt je erstem Signal und/oder je Ausführung der Schritte a bis d zwischen jeweiligem ersten Signal gemessen mit einer der zweiten Antennen und jeweiligen zweitem Signal gemessen mit einer der ersten Antennen und/oder wird jede zweite Phaseninformation gewonnen durch berechnen einer zweiten theoretischen Phasenlage am ersten Objekt zu einem zweiten fiktiven Zeitpunkt je erstem Signal zwischen jeweiligen erstem Signal gemessen mit einer der zweiten Antennen und jeweiligen zweitem Signal gemessen mit einer der ersten Antennen.

Dabei bilden die jeweils verwendete erste Antenne und die jeweils verwendete zweite Antenne eine Antennenkombination und ist insbesondere jede theoretische Phasenlage der Antennenkombination zugeordnet, mittels derer sie erfasst wurde. Mit Vorteil wird mindestens für eine Auswahl der möglichen Antennenkombinationen der mindestens einen ersten und der mindestens einen zweiten Antenne je Ausführung der Schritte a bis d eine erste theoretische Phasenlage und/oder zweite theoretische Phasenlage als Phaseninformation berechnet und insbesondere im Messwertobjekt beinhaltet und/oder zu dessen Erstellung verwendet. Insbesondere beinhaltet die Auswahl mindestens fünf Antennenkombinationen.

Erster und zweiter fiktiver Zeitpunkt liegen bevorzugt nah bei einander, insbesondere nicht weiter auseinander als $100\mu s$, insbesondere nicht weiter auseinander als $20\mu s$ , insbesondere nicht weiter auseinander als $2\mu s$. Sie sind insbesondere möglichst identisch, also so identisch, wie es die Genauigkeit des verwendeten System und/oder der verwendeten Bauteile zulässt und/oder identisch.

Dies erfolgt insbesondere mittels Bestimmung der Frequenzen des jeweiligen ersten Signals und des jeweiligen zweiten Signals am zweiten Objekt und/oder der Frequenzdifferenz zwischen dem jeweiligen ersten Signal und dem jeweiligen zweiten Signal am zweiten Objekt und/oder mittels Bestimmung der Frequenzen des jeweiligen zweiten Signals und des jeweiligen ersten Signals am ersten Objekt und/oder der Frequenzdifferenz zwischen dem jeweiligen zweiten Signal und dem jeweiligen ersten Signal am ersten Objekt.

Insbesondere liegen der erste und/oder zweite fiktive Zeitpunkt und/oder liegt der fiktive Zeitpunkt als der fiktive Zeitpunkt, wenn erster und zweiter fiktiver Zeitpunkt identisch sind, zwischen den Phasenmessungen am ersten und zweiten Objekt, insbesondere mittig. Dadurch kann die Auswirkungen der Ungenauigkeit in der Frequenzmessungen und/oder Frequenzdifferenzmessungen minimiert werden.

Insbesondere werden als Phaseninformationen Phasenlagen verwendet oder beinhaltet. Insbesondere wird die aufsummierte Phasenverschiebung und/oder Phasendifferenz der Übertragungen des ersten Signals vom ersten zum zweiten Objekt und des zweiten Signals vom zweiten Objekt zum ersten Objekt oder die Hälfte der aufsummierten Phasenverschiebung und/oder der Differenz oder die Summe der jeweiligen ersten und zweiten theoretischen Phasenlage oder deren Hälfte als Phaseninformation, insbesondere der Übertragung der Signale jeweils zwischen einer der ersten und einer der zweiten Antennen, verwendet und/oder die Phaseninformation zusammen mit einer Amplitude, insbesondere des empfangenen ersten oder zweiten Signals, und/oder normierten Amplitude des empfangenen ersten oder zweiten Signals insbesondere der Übertragung der Signale jeweils zwischen einer der ersten und einer der zweiten Antennen, verwendet, um mindestens eine komplexe Messzahl des Messwertobjekts je Ausführung der Schritte a bis d zu bilden.

Dies erfolgt insbesondere derart, dass als Messzahl die folgende Formel verwendet wird

$$(\text{Amplitude x konstantem Faktor})\ e^{i(1.\ \text{Phasenverschiebung} + 2.\ \text{Phasenverschiebung}) \times 0,5}$$

Insbesondere werden die Messwerte, insbesondere wie soeben beschrieben gebildete komplexe Messzahlen, der ersten und/oder zweiten Antennen, insbesondere jeweils einer Kombination einer der ersten und einer der zweiten Antennen, jeweils in einer Zeile einer Messwertmatrix angeordnet, wobei die unterschiedlichen Zeilen durch Messwerte, insbesondere wie soeben beschrieben gebildete komplexe Messzahlen, der Antenne und/oder Antennenkombinationen jeweils einer Ausführung der Schritte a bis d gefüllt werden und die unterschiedlichen Spaltenwerte einer Zeile jeweils durch die Messwerte, insbesondere wie soeben beschrieben gebildete komplexe Messzahlen, jeweils einer ersten und/oder zweiten Antenne und/oder Antennenkombinationen gebildet werden.

Führt man beispielsweise die Schritte a bis d n-mal durch und verwendet e erste und f zweite Antennen, so können e x f Antennenkombinationen gebildet werden und somit bei jeder Durchführung der Schritte a bis d insbesondere e x f komplexe Messzahlen gewonnen werden, die oder eine Auswahl derer insbesondere in den Spalten einer Zeile des Messwertobjekts, insbesondere Messwertmatrix, angeordnet werden, wobei insbesondere maximal e x f Spalten vorhanden sind. Insgesamt lässt sich durch die n-fache Durchführung insbesondere eine Messwertmatrix mit n Zeilen und maximal e x f Spalten gewinnen.

Mit besonderem Vorteil ist dabei jede komplexe Messzahl eines ersten und eines zweiten Signals einer Ausführung der Schritte a bis d einer Antennenkombination einer ersten und einer zweiten Antenne zugeordnet und/oder gebildet nach folgender Rechenvorschrift

$$c1 \times A\, e^{i \times (phi1 + phi2) \times c2}$$

wobei A eine gemessene Amplitude, insbesondere die Amplitude der Messung des jeweiligen ersten und/oder des jeweiligen zweiten Signals an der ersten und/oder der zweiten Antenne der jeweiligen Antennenkombination ist und/oder diese beinhaltet, beispielsweise als Summe,

phi1 die erste theoretische Phasenlage des jeweiligen ersten und des jeweiligen zweiten Signals der jeweiligen Antennenkombination und/oder Phasenverschiebung der Übertragung vom ersten zum zweiten Objekt und

phi2 die zweite theoretische Phasenlage des jeweiligen zweiten und des jeweiligen ersten Signals der jeweiligen Antennenkombination und/oder Phasenverschiebung der Übertragung vom zweiten zum ersten Objekt und

c1 und c2 Konstanten, insbesondere identisch für alle Messwertzahlen einer Messwertmatrix, sind.

Die Messwertmatrix ist also insbesondere gebildet aus den Zahlen oder einer Auswahl der Zahlen

$$M_{j,xy} = c1 \times A(AKxy,\, j)\, e^{i \times (phi1(AKxy,\, j) + phi2(AKxy,\, j)) \times c2}$$

wobei $M_{j,xy}$ die Zahl in der j ten Zeile ist und $0 < j < = n$ und AKxy die Antennenkombination der e ten ersten und f ten zweiten Antenne ist, mi $0<x< =e$ und $0<y< =f$ und

phi1 (AKxy, j) die erste theoretische Phasenlage der Antennenkombination AKxy der j ten Ausführung der Schritte a bis d und/oder Phasenverschiebung der Übertragung vom ersten zum zweiten Objekt der j ten Ausführung der Schritte a bis d unter Nutzung der der Antennenkombination AKxy und

phi2(AKxy, j) die zweite theoretische Phasenlage der Antennenkombination AKxy der j ten Ausführung der Schritte a bis d und/oder Phasenverschiebung der Übertragung vom zweiten zum ersten Objekt der j ten Ausführung der Schritte a bis d unter Nutzung der der Antennenkombination AKxy und

c1 und c2 Konstanten, insbesondere identisch für alle Messwertzahlen einer Messwertmatrix, sind. Dabei ist die Auswahl insbesondere derart, dass alle Zahlen $M_{j,xy}$ einer Auswahl von Antennenkombinationen AKxy nicht verwendet werden. Insbesondere gibt j die Zeile und xy die Spalte der Messwertmatrix an, wobei insbesondere xy von nicht verwendeten AKxy übersprungen werden und/oder die entsprechenden Spalten xy entfernt werden.

Insbesondere kann die Messwertmatrix und/oder die Autokorrelationsmatrix der Messwertmatrix das Messwertobjekt bilden und/oder das Messwertobjekt aus der Messwertmatrix gebildet werden. Insbesondere wird eine Autokorrelationsmatrix aus den Messwerten, insbesondere aus einer Messwertmatrix, als Messwertobjekt erstellt. Es können aber als Messzahlen auch nur die einer Auswahl von Antennenkombinationen verwendet und/oder in die Messwertmatrix aufgenommen werden.

Eine Messwertmatrix aus n Ausführungen der Schritte a bis d mit e ersten und/oder f zweiten Antennen weist also insbesondere n Zeilen und/oder insbesondere min (e,f) bis e x f Spalten, insbesondere e + f bis e x f Spalten, auf.

Das Verfahren beinhaltet auch das Ermitteln einer vermeintlichen Entfernung und/oder vermeintlichen, insbesondere relativen, Geschwindigkeit zwischen erstem und zweitem Objekt aus dem Messwertobjekt. Dabei ist die vermeintliche Geschwindigkeit eine Geschwindigkeit, mit der sich die Objekte aufeinander zu bewegen und/oder voneinander weg bewegen, also insbesondere eine eindimensionale relative Geschwindigkeit zwischen den Objekten.

Die Ermittlung einer vermeintlichen Entfernung und/oder vermeintlichen relativen Geschwindigkeit zwischen erstem und zweitem Objekt aus dem Messwertobjekt erfolgt durch Vergleich des Messwertobjekts mit einer Menge und/oder Auswahl gespeicherter und/oder errechneter Referenzmesswertobjekte. Die Referenzmesswertobjekte betreffen dabei unterschiedliche Entfernungen und unterschiedliche relative Geschwindigkeiten, wobei jedes Referenzmesswertobjekt einer Entfernungen und einer Geschwindigkeiten zugeordnet ist.

Als die vermeintliche Entfernung wird die Entfernung angenommen, die dem gespeicherten und/oder errechneten Referenzmesswertobjekt zugeordnet ist, das am besten zu dem Messwertobjekt passt, den geringsten Abstand zu ihm aufweist und/oder diesem am ähnlichsten ist. Alternativ oder zusätzlich kann als die vermeintliche relative Geschwindigkeit die Geschwindigkeit angenommen werden, die dem gespeicherten und/oder errechneten Referenzmesswertobjekt zugeordnet ist, das am besten zu dem Messwertobjekt passt, den geringsten Abstand zu ihm aufweist und/oder diesem am ähnlichsten ist.

Dabei kann mit mehrstufigen Vergleichen gearbeitet werden, in denen, insbesondere iterativ, die Menge und/oder Auswahl der Referenzmesswertobjekte, mit denen das Messwertobjekt verglichen wird, verändert wird, insbesondere um die Genauigkeit iterativ zu steigern. Dabei wird insbesondere zunächst mit einer ersten, insbesondere kleinen, Auswahl von Referenzmesswertobjekten betreffend einen ersten Entfernungsbereich gearbeitet, und die Auswahl solange gegen weitere, insbesondere kleine, Auswahlen von Referenzmesswertobjekten betreffend jeweils Entfernungsbereiche, betreffend jeweils größere Entfernungen als die vorherige Auswahl, bis eine vorbestimmte Ähnlichkeit von mindestens einem Referenzmesswertobjekte der zuletzt verwendeten Auswahl zum Messwertobjekt überschritten und/oder eine vorbestimmte Entfernung zum Messwertobjekt von mindestens einem Referenzmesswertobjekte der zuletzt verwendeten Auswahl unterschritten wird und/oder die größte Ähnlichkeit eines Referenzmesswertobjektes der Auswahl zum Messwertobjekt verglichen mit der größte Ähnlichkeit eines Referenzmesswertobjektes der vorherigen Auswahl zum Messwertobjekt abfällt oder die geringste Entfernung eines Referenzmesswertobjektes der Auswahl zum Messwertobjekt verglichen mit der geringste Entfernung eines Referenzmesswertobjektes der vorherigen Auswahl zum Messwertobjekt ansteigt.

Insbesondere wird nachfolgend mit einer Auswahl von Referenzmesswertobjekten gearbeitet und das Messwertobjekt mit diesen verglichen, die Entfernungen und/oder Geschwindigkeiten betreffen, die eine maximale vorbestimmte Abweichung von der Geschwindigkeit und/oder Entfernung des zu dem zum Messwertobjekt ähnlichsten, geringst entferntesten und/oder best passendsten Referenzmesswertobjekt der letzten und/oder vorletzten Auswahlen aufweisen. Hier kann wiederum iterativ mit weiteren Auswahlen gearbeitet werden, die jeweils eine kleinere vorbestimmte maximale Abweichung in Bezug auf Geschwindigkeit und/oder Entfernung zum in der vorausgehenden Auswahl zum Messwertobjekt ähnlichsten, best passendsten und/oder zum Messwertobjekt geringst entferntesten Referenzmesswertobjekt aufweisen.

Eine kleine Auswahl enthält insbesondere maximal 20% der verfügbaren gespeicherten und/oder errechneten Referenzmesswertobjekte und/oder maximal 400, insbesondere maximal 100, Referenzmesswertobjekte und/oder mindestens 10 Referenzmesswertobjekte.

Als Maß für die Ähnlichkeit und/oder geringste Entfernung wird insbesondere eine Metrik eingesetzt, insbesondere nach einer Projektion, insbesondere des Messwertobjekts und/oder seiner Eigenvektoren und/oder derer seiner Autokorrelationsmatrix oder einer Auswahl der Eigenvektoren oder Linearkombination daraus in den durch die Menge und/oder Auswahl und/oder aktuell verwendete Auswahl von Referenzmesswertobjekten aufgespannten Raum oder umgekehrt. Die Auswahl erfolgt insbesondere anhand der Eigenwerte, unter Auslassen der Eigenwerte zu kleineren Eigenwerten als denjenigen, die nicht ausgelassen werden.

Als Metrik werden insbesondere solche verwendet, die die nachfolgenden Anforderungen erfüllen, auch Abstandsmetrik genannt:
Der Abstand zweier nicht identischer Objekte x und y darf nicht kleiner als Null sein. Zwei völlig ähnliche und/oder identische Objekte haben den Abstand Null. Der Abstand zwischen Objekt x und Objekt y ist derselbe wie zwischen Objekt y und Objekt x. Wenn man auf dem Weg von Objekt x zu Objekt z einen "Umweg" über Objekt y nimmt, kann der Weg nicht kürzer sein als bei einem direkten Weg von Objekt x zum Objekt z. Als Objekte werden dabei Messwertobjekte und/oder Referenzmesswertobjekte betrachtet.

Insbesondere handelt es sich um eine Euklidsche Entfernungs- und/oder Ähnlichkeitsmetrik. Insbesondere möglich ist eine Manhatten Entfernungs- und/oder Ähnlichkeitsmetrik, eine L-Norm und/oder Minkoswki Entfernungs- und/oder Ähnlichkeitsmetrik.

Insbesondere wird die Entfernung und/oder Ähnlichkeit bestimmt durch die Suche nach dem Referenzmesswertobjekte, das den geringsten Abstand von einer Hyperebene oder einem Unterraum, insbesondere mit geringerer Dimension als die einer Hyperebene, im durch die Menge und/oder Auswahl von Referenzmesswertobjekte und/oder gerade verwendeten Auswahl und/oder den Spaltenvektoren der Referenzmesswertobjekte und/oder der gerade verwendeten Auswahl aufgespannten Referenzraum vom in den Raum projizierten Messwertobjekt oder seiner Eigenvektoren, der seiner Autokorrelationsmatrix und/oder einer Linearkombination der Eigenvektoren aufweist, insbesondere durch eine Abstandsmetrik und/oder oben genannte Metrik bestimmt. Insbesondere ist der Unterraum der Raum oder die Hyperebene aufgespannt durch die in den Referenzraum projizierten Spaltenvektoren der Messwertmatrix, insbesondere in Form einer Autokorrelationsmatrix, ihren Eigenvektoren oder einer Auswahl ihrer Eigenvektoren, wobei die Auswahl der Eigenvektoren insbesondere dadurch gegeben ist, das die z Eigenvektoren mit den größten Eigenwerten verwendet werden, wobei z insbesondere kleiner gleich dem Rang der Messwertmatrix x 0,75 und/oder des Messwertobjekts x 0,75 und/oder keiner 10 und/oder kleiner 6 und/oder kleiner gleich der Anzahl der zur Bildung der Messwertmatrix und/oder des Messwertobjekts verwendeten Antennenkombinationen ist.

Die Referenzmesswertobjekte stellen insbesondere Matrizen, insbesondere Autokorrelationsmatrizen dar. Insbesondere gleichen die Referenzmesswertobjekte jeweils dem bei der dem jeweiligen Referenzmesswertobjekt zugeordneten Geschwindigkeit und/oder Entfernungen zwischen den zwei Objekten bei der Durchführung eines erfindungsgemäßen, insbesondere des gleichen, Verfahrens, insbesondere in ungestörter Singlepathanordnung und/oder insbesondere mit den ersten Frequenzen und den zweiten Frequenzen und/oder insbesondere mit der selben Auswahl von Antennenkombinationen, bis zur Bestimmung des Messwertobjekts mit den zwei Objekten zu erwartenden und/oder gemessenen und/oder erstellten Messwertobjekt. Die Referenzmesswertobjekte weisen jeweils insbesondere die selbe oder eine größere Dimension auf, wie das Messwertobjekt, insbesondere die Messwertmatrix, insbesondere vor der Reduzierung derer Dimension oder Rang insbesondere weisen sie komplexe Zahlen, insbesondere komplexe Messzahlen auf. Die Referenzmesswertobjekte sind insbesondere so gewählt und/oder gebildet, dass jedes Referenzmesswertobjekt zu einem Messwertobjekt identisch ist, das sich, insbesondere in ungestörter Singlepath Anordnung, bei der Durchführung eines erfindungsgemäßen, insbesondere des gleichen, Verfahren bis zur Erstellung des Messwertobjekts ergibt und/oder zu erwarten ist, bei Durchführung mit der dem Referenzmesswertobjekt jeweils zugeordneten Entfernung und Geschwindigkeit zwischen den Objekten, insbesondere mit den ersten Frequenzen und den zweiten Frequenzen, die dem Referenzmesswertobjekt zugeordnet sind und/oder insbesondere mit derselben Auswahl von Antennenkombinationen, die dem Referenzmesswertobjekt zugeordnet ist. Unter einer ungestörten Singlepathanordnung ist insbesondere die Anordnung der zwei Objekte in einem leeren Raum zu verstehen, der insbesondere unendlich groß ist und/oder dessen Ränder nicht oder nur weniger als 10% der Strahlung reflektieren und/oder der in jeder Richtung mindestens zehnmal, insbesondere mindestens 100mal, so groß ist wie der Abstand zwischen den zwei Objekten.

Die Referenzmesswertobjekte können beispielsweise durch Erzeugung von Messwertobjekten bei bekannten Entfernungen und Geschwindigkeiten zwischen den zwei Objekten erfasst werden, insbesondere in idealer ungestörter Anordnung, insbesondere in einer ungestörten Singlepathumgebung. Bevorzugt werden sie aber, insbesondere um Messungenauigkeiten und Umwelteinflüsse auszuschließen, berechnet, insbesondere für eine ungestörten Singlepath Umgebung, also für den Fall der Anordnung der zwei Objekte in einem freien Raum ohne Hindernisse und/oder bei gradliniger Ausbreitung der Signale vom Sender zum Empfänger und/oder zwischen erstem und zweitem Objekt, insbesondere für mindestens eine Menge und/oder Auswahl von Entfernungs- und Geschwindigkeitskombinationen, insbesondere mindestens 20, insbesondere mindestens 100, Entfernungs- und Geschwindigkeitskombinationen, insbesondere mit mindestens mindestens 10, insbesondere mindestens 500, unterschiedlichen Entfernungen und/oder Geschwindigkeiten.

Die Referenzmesswertobjekte werden insbesondere durch Berechnung von komplexen Referenzmesszahlen und Anordnen von komplexen Referenzmesszahlen in je einer Matrix pro Referenzmesswertobjekt, wobei diese Matrix oder deren Autokorrelationsmatrix als ein Referenzmesswertobjekt verwendet wird. Insbesondere werden auf dieses Weise die Referenzmesswertobjekte gewonnen. Dabei werden die komplexen Referenzmesszahlen insbesondere jeweils berechnet durch Berechnung der Ausbreitung, insbesondere der Phasenverschiebung und/oder Amplitude, eines ersten Signals von einer der ersten Antennen des ersten Objekt, insbesondere mit einer ersten Frequenz und/oder ersten Referenzfrequenz, zu einer der zweiten Antennen des zweiten Objekts und eines zweiten Signals von der zweiten Antenne des zweiten Objekts zu der ersten Antenne des ersten Objekts, insbesondere mit einer zweiten Frequenz und/oder zweiten Referenzfrequenz. Insbesondere wird pro Referenzmesswertobjekt pro Ausführung der Schritte a bis d und/oder pro Abfolge von erstem und zweitem Signal und/oder Frequenz und pro verwendeter, benötigter und/oder ausgewählter Antennenkombination eine komplexe Referenzmesszahl berechnet. Insbesondere wird für jeweils eine Entfernungs- und Geschwindigkeitskombination zwischen den Objekten und pro Ausführung der Schritte a bis d und/oder pro Abfolge von erstem und zweitem Signal und pro verwendeter, benötigter oder ausgewählter Antennenkombination eine komplexe Referenzmesszahl berechnet. Insbesondere werden die Berechnungen so durchgeführt, dass Zwischenergebnisse für eine Mehrzahl von Berechnungen von Referenzmesszahlen (wieder) verwendet werden können.

Die komplexen Referenzmesszahlen eines Referenzmesswertobjektes entsprechen insbesondere den komplexen Messzahlen des Messwertobjekts, das sich, insbesondere in ungestörter Singlepath Anordnung, bei der Durchführung eines erfindungsgemäßen, insbesondere des gleichen, Verfahren bis zur Erstellung des Messwertobjekts ergibt und/oder zu erwarten ist, insbesondere ohne Reduzierung der Dimension, bei Durchführung mit der dem Referenzmesswertobjekt jeweils zugeordneten Entfernung und Geschwindigkeit zwischen den Objekten, insbesondere mit den ersten Frequenzen und den zweiten Frequenzen, die dem Referenzmesswertobjekt zugeordnet sind und/oder insbesondere mit derselben Auswahl von Antennenkombinationen, die dem Referenzmesswertobjekt zugeordnet ist.

Insbesondere sind die Referenzmesswertobjekte jeweils einer Abfolge und/oder Menge unterschiedlichere erster Referenzfrequenzen und/oder einer Abfolge und/oder Menge unterschiedlicher zweiter Referenzfrequenzen und/oder einer Abfolge und/oder Menge unterschiedlicher erster und/oder und zweiter Signale zugeordnet. Insbesondere sind die Referenzmesswertobjekte jeweils einer Abfolge und/oder Menge von Antennenkombinationen zugeordnet. Die Referenzmesswertobjekte sind insbesondere so gebildet, dass sie mit Messwertobjekten identisch sind, die sich bei der Durchführung des Verfahrens mit der Abfolge und/oder Menge unterschiedlicher erster Referenzfrequenzen als unterschiedliche erste Frequenzen und/oder mit der Abfolge und/oder Menge unterschiedlicher zweiter Referenzfrequenzen als unterschiedliche zweite Frequenzen und/oder mit der Abfolge und/oder Menge an Antennenkombinationen als Auswahl an Antennenkombinationen und/oder erste und/oder zweite Antennen ergibt und/oder zu erwarten sind, insbesondere in einer ungestörten Singlepath Umgebung.

Insbesondere werden die Referenzmesswertobjekte, insbesondere während der vielfachen Ausführungen der Schritte a bis d des Verfahrens, für die verwendeten und/oder ausgewählten Antennenkombinationen und/oder die ersten und zweiten Signale und/oder die ersten und zweiten Frequenzen für eine Auswahl von Entfernungen und/oder Geschwindigkeiten berechnet.

Mit besonderem Vorteil werden die erste und zweite Frequenz einer Ausführung der Schritte a bis d möglichst identisch gewählt, insbesondere mit einer Differenz von weniger als 20kHz, insbesondere weniger als 200Hz, und/oder weniger als 1 Promille der Frequenz des ersten und/oder zweiten Signals, insbesondere weniger als 0,1 Promille der Frequenz des ersten und/oder zweiten Signals. Dies kann beispielsweise durch vorherigen Austausch von elektromagnetischen Wellen zwischen dem ersten und zweitem Objekt erfolgen, mittels der die lokalen Oszillatoren auf identische und/oder möglichst ähnliche Frequenzen gestimmt werden insbesondere mit einer Differenz von weniger als 20kHz, insbesondere weniger als 200Hz, und/oder weniger als 1 Promille der Frequenz des ersten und/oder zweiten Signals. In einer solchen Ausgestaltung mit Frequenzdifferenzen von weniger als 20kHz, insbesondere weniger als 200Hz, und/oder weniger als 1 Promille der Frequenz des ersten und/oder zweiten Signals kann auch auf die Frequenzdifferenzmessung verzichtet werden und angenommen werden, dass die Frequenzen gleich sind. Dann sind insbesondere die Referenzmesswertobjekte insbesondere einer Abfolge und/oder Menge von Referenzfrequenzen zugordnet anstelle einer Abfolge und/oder Menge von ersten Referenzfrequenzen und einer Abfolge und/oder Menge von ersten Referenzfrequenzen. Die Referenzmesswertobjekte sind dann insbesondere so gebildet, dass sie mit Messwertobjekten identisch sind, die sich bei der Durchführung des Verfahrens mit der Abfolge und/oder Menge unterschiedlicher Referenzfrequenzen als unterschiedliche erste Frequenzen und als unterschiedliche zweite Frequenzen und/oder mit der Abfolge und/oder Menge an Antennenkombinationen als Auswahl an Antennenkombinationen und/oder erste und/oder zweite Antennen ergibt und/oder zu erwarten sind, insbesondere in einer ungestörten Singlepath Umgebung.

Es ist aber auch möglich, stärker unterschiedliche Frequenzen zu verwenden.

Da der erste fiktive Zeitpunkt und der zweite fiktive Zeitpunkt in der Praxis meist zumindest geringfügig voneinander abweichen entsteht bei Frequenzunterschieden in der Regel bei Berechnung der theoretischen Phasenlage(n) zu dem/den fiktiven Zeitpunkt(en) ein Phasenfehler, insbesondere in der Größe der Zeitabweichung zwischen erstem fiktiven Zeitpunkt und zweitem fiktiven Zeitpunkt multipliziert mit dem Frequenzunterschied. Da in der Regel aber auch durch andere Einflüsse, wie Jitter und Rauschen, mit Phasenfehlern gerechnet werden muss, ist es in der Regel ausreichend, die Frequenzen soweit einander anzunähern oder angenähert zu wählen, dass sich dadurch kein größerer Fehler ergibt, als durch andere Einflüsse ohnehin gegeben ist. Ein Phasenfehler durch die Zeitungenauigkeit und die Frequenzdifferenz von kleiner oder gleich 10°, insbesondere kleiner gleich 3°, ist also häufig ausreichend. Es wir daher bevorzugt das Verfahren so auszugestalten, dass die Differenz zwischen erstem fiktiven Zeitpunkt und zweitem fiktiven Zeitpunkt multipliziert mit der Differenz der Frequenz des ersten und der Frequenz des zweiten Signals bei einer Ausführung der Schritte a bis d, insbesondere allen Ausführungen der Schritte a bis d, kleiner ist als 10°, insbesondere kleiner oder gleich 3° ist und/oder kleiner gleich dem durch Rauschen und Jitter bedingten Phasenfehler bei der Messung der Phasenlage am ersten und/oder zweiten Objekt und/oder kleiner gleich dem Fehler bei der Erfassung der ersten und/oder zweiten Phaseninformation.

Mit besonderem Vorteil beinhalten die Messwertobjekte die Phaseninformationen der empfangenen ersten und/oder zweiten Signale und die Amplitude der empfangenen ersten und/oder zweiten Signale.

Die ersten Signale der unterschiedlichen Ausführungen der Schritte a bis d können gleich oder unterschiedlich und/oder die zweiten Signale könen gleich oder ungleich und/oder das erste Signal einer Ausführung der Schritte a bis d kann zum zweiten Signal der Ausführung gleich oder verschieden sein, insbesondere in Bezug auf den Signalverlauf, die Amplitude, Polarisation und/oder die im Signal aufmodulierte Information, der Amplitude und/oder Polarisation. Dies gilt auch für die Frequenz, wobei es insbesondere bevorzugt wird, wenn das erste Signal und das zweite Signal innerhalb einer jeden Ausführung der Schritte a bis d bezüglich der Frequenz identisch sind oder zumindest eine gemeinsame erste und zweite Frequenz beinhalten, wobei die ersten und zweiten Signale und/oder ersten und zweiten Frequenzen unterschiedlicher Ausführungen der Schritte a bis d sich unterscheiden und sich insbesondere zumindest teilweise unterscheiden.

Mit besonderem Vorteil beinhaltet das Verfahren das Übermitteln und/oder die Nutzung der Frequenzdifferenzen jeweils zwischen der ersten und der zweiten Frequenz am ersten und/oder am zweiten Objekt und/oder der ersten und/oder zweiten Frequenzen am ersten und/oder zweiten Objekt zur Bearbeitung des Messwertobjekts und/oder zur Ermittlung der ersten und/oder zweiten theoretischen Phasenlage und/oder zur Ermittlung der vermeintlichen Entfernung und/oder vermeintlichen relativen Geschwindigkeit.

Insbesondere wird das Messwertobjekt vor dem Vergleich mit den Referenzmesswertobjekten zur Entfernung und/oder Verringerung der Auswirkungen von Phasensprüngen und/oder Multipathumgebungen und/oder Umwelteinflüssen und/oder Messfehlern und/oder Verringerung der Auswirkungen von Rauschen, Phasenjitter und/oder Messfehlern und/oder zur Reduzierung der Dimension des Messwertobjekts bearbeitet.

Mit besonderem Vorteil beinhaltet das Verfahren die Bearbeitung des Messwertobjekts durch Reduzieren der Dimension, insbesondere auf Basis der Eigenwerte, dadurch dass nur die Eigenvektoren der z größten Eigenwerte des Messwertobjekts oder Linearkombinationen daraus als Messwertobjekt verwendet werden, wobei die Auswahl der Eigenvektoren insbesondere dadurch gegeben ist, das die z Eigenvektoren mit den größten Eigenwerten verwendet werden, wobei z insbesondere kleiner gleich dem Rang der Messwertmatrix x 0,75 und/oder des Messwertobjekts x 0,75 und/oder keiner 10 und/oder kleiner 6 und/oder kleiner gleich der Anzahl der zur Bildung der Messwertmatrix und/oder des Messwertobjekts verwendeten Antennenkombinationen ist.

Mit besonderem Vorteil beinhaltet die Bearbeitung des Messwertobjekts, insbesondere in einem ersten Schritt, das Bearbeiten der beinhalten Phaseninformation oder beinhalteten Phasenlagen, ersten und/oder zweiten theoretischen Phasenlagen und/oder der komplexen Messzahlen, insbesondere durch Halbierung zumindest einiger, insbesondere aller, der Phaseninformation oder Phasenlagen, insbesondere zumindest einiger der imaginären Anteile oder Phasenanteile der komplexen Messzahlen, insbesondere abhängig von der im Messwertobjekt beinhalteten Werte betreffend benachbarte erste und/oder zweite Frequenzen.

Insbesondere wird, insbesondere anschließend, eine Bearbeitung, insbesondere Veränderung und/oder Umkehrung der Phasenlage und/oder Phaseninformation um 180°, insbesondere der Phasenlage einer komplexen Messzahl, vorgenommen, insbesondere dann, wenn sich durch die Veränderung der Phaseninformationen und/oder Phasenlage der komplexen Messzahl die Differenz zur Phaseninformation und/oder Phasenlage der komplexen Messzahl der vorherigen und/oder nachfolgenden Ausführung der Schritte a bis d und/oder Ausführung der Schritte a bis d mit der nächsthöheren ersten und/oder zweiten und/oder Summe aus erster und zweiter Frequenz und/oder nächst niedrigen ersten und/oder zweiten und/oder Summe aus erster und zweiter Frequenz der Ausführungen, und/oder die Differenz zu der Phaseninformationen und/oder Phasenlage der komplexen Messzahl der in der selben Spalte aber eine Zeile ober und/oder unterhalb angeordneten komplexen Messzahl verringert, insbesondere unter Betrachtung der Phaseninformationen und/oder Phasenlagen der komplexen Messzahlen unter Multiplikation jeder Phaseninformation mit der Amplitude der komplexen Messzahl, insbesondere betrachtet modulo 2 Pi.

Mit besonderem Vorteil beinhaltet die Bearbeitung des Messwertobjekts das Bearbeiten der beinhalten Phaseninformation oder beinhalteten Phasenlagen, ersten und/oder zweiten theoretischen Phasenlagen und/oder der komplexen Messzahlen, insbesondere durch Addieren oder Subtrahieren von 180° zumindest zu oder von einigen der Phaseninformation oder Phasenlagen, insbesondere zumindest zu oder von einigen der komplexen Messzahlen, insbesondere abhängig von der der im Messwertobjekt beinhalteten Werte betreffend benachbarte erste und/oder zweite Frequenzen.

Insbesondere werden alle Phaseninformationen und/oder komplexen Messzahlen einer Zeile einer Messwertmatrix, insbesondere aller Zeilen einer Messwertmatrix jeweils, identisch, beispielsweise durch jeweiliges addieren von 180° zu der Phaseninformation oder Phasenlage, insbesondere zu der Phasenlage der komplexen Messzahl, bearbeitet.

Dadurch kann ich die Phasenverschiebung zwischen den Ausführungen der Schritte a bis d für alle Antennenkombinationen gleichzeitig betrachtet und/oder korrigiert werden.

Insbesondere wird danach entschieden, ob die Phasenlage um 180° geändert werden soll, ob dadurch die Summe über

eine Zeile, alle Antennenkombinationen einer Zeile oder einer Ausführung der Schritte a bis d und/oder alle Spalten und/oder eine Ausführung der Schritte a bis d

der Differenzen der Phasen zu den Phasen mindestens einer, insbesondere zwei, anderen Ausführungen der Schritte a bis d und/oder der Summe der absoluten Werte der Phasen über eine Zeile, alle Antennenkombinationen und/oder über alle Spalten und/oder einer Ausführung der Schritte a bis d, insbesondere eines Messwertobjekts und/oder Summe der, insbesondere mit der jeweiligen Amplitude der Messzahl gewichteten Phasen,, verringert wird. Insbesondere wird bei einer Verringerung durch eine solche Veränderung der Phasenlage um 180° eine Veränderung der Phasenlage um 180° durchgeführt, sonst nicht.

Insbesondere wird jeweils für ein j die Summe Phase($M_{j,xy}$) und/oder Amplitude($M_{j,xy}$) x Phase($M_{j,xy}$) über alle xy gebildet und geprüft, ob sie sich durch Änderung aller Phasenlagen um 180° in $M_{j,xy}$ für dieses j verringert und bei einer Verringerung eine Veränderung der Phasenlage um 180° durchgeführt.

Insbesondere alternativ und/oder zusätzlich wird jeweils für ein $j = j1$ die Summe über alle xy der Zahlen $M_{j1,xy}$ - $M_{j2,xy}$ und/oder Zahlen $M_{j1,xy}$ - $M_{j2,xy}$ - $M_{j3,xy}$ mit $j1 <> j2 < > j3$ und $j1 <> j3$, insbesondere $j2 + 1 = j1$ und $j1 + 1 = j3$ gebildet und geprüft, ob sie sich durch Änderung aller Phasenlagen um 180° in $M_{j1,xy}$ für verringert und bei Verringerung alle Phasenlagen der $M_{j1,xy}$ um 180° geändert.

Alternativ und/oder zusätzlich wird, insbesondere in einem weiteren Schritt, eine Bearbeitung, insbesondere Veränderung und/oder Umkehrung der Phasenlage und/oder Phaseninformation um 180°, insbesondere dann vorgenommen, wenn dadurch die Phasenlage und/oder Phaseninformation der bei einer erwarteten Entfernung und/oder Geschwindigkeit zwischen erstem und zweitem Objekt erwarteten Phasenlage und/oder Phaseninformation näher kommt. Dabei wird die erwartete Entfernung und/oder Geschwindigkeit zwischen erstem und zweitem Objekt aus einer anderen, also beispielsweise einer früheren Messung oder einer Messung mittels eines anderen Verfahren, insbesondere anhand der erfindungsgemäßen Signale, gewonnen. Die erwartete Entfernung und/oder Geschwindigkeit zwischen erstem und zweitem Objekt wird insbesondere mittels mindestens einer Fouriertransformation der Messwerte des/der ersten und/oder zweiten Signale/s mindestens einer der Ausführungen der Schritte a bis d und/oder mittels des und/oder der dominanten, stärksten und/oder größten Anteile/s und/oder Summanden und/oder Spektralanteil mindestens einer Fouriertransformation der Messwerte des/der ersten und/oder zweiten Signale/s und/oder mittels des und/oder der Anteile/s mit der größten Amplitude einer Fouriertransformation der Messwerte mindestens einer der Ausführungen der Schritte a bis d der Messwerte des/der ersten und/oder zweiten Signale/s mindestens einer der Ausführungen der Schritte a bis d bestimmt.

Mit Vorteil werden mindestens zwei erste und/oder mindestens zwei zweite Antennen zum Empfang und/oder zum Senden verwendet.

Mit Vorteil wird die ersten Phaseninformation je erstem Signal und/oder je Ausführung der Schritte a bis d aus und/oder mittels mindestens zwei ermittelten Phasenlagen ermittelt und/oder wird die zweite Phaseninformation je zweitem Signal und/oder je Ausführung der Schritte a bis d aus und/oder mittels mindestens zwei ermittelten Phasenlagen ermittelt. Insbesondere ist die erste Phaseninformationen eine relative Phasenlage des ersten Signals zu einem zweiten Oszillator am zweiten Objekt und/oder zum zweiten Signal am zweiten Objekt und ist die zweite Phaseninformation eine relative Phasenlage des zweiten Signals zu einem ersten Oszillator am ersten Objekt und/oder zum ersten Signal am ersten Objekt. Insbesondere wird die erste Phaseninformation aus einer relativen Phasenlage des ersten Signals zu einem zweiten Oszillator am zweiten Objekt und/oder zum zweiten Signal am zweiten Objekt und wird die zweite Phaseninformation aus einer relativen Phasenlage des zweiten Signals zu einem ersten Oszillator am ersten Objekt und/oder zum ersten Signal am ersten Objekt, gewonnen. Mit besonderem Vorteil wird die erste Phaseninformationen aus einer relativen Phasenlage des ersten Signals zu einem ersten Oszillator am ersten Objekt und aus einer relativen Phasenlage des ersten Signals zu einem zweiten Oszillator am zweiten Objekt, insbesondere durch deren Addition, und/oder wird die zweite Phaseninformationen aus einer relativen Phasenlage des zweiten Signals zu dem zweiten Oszillator am zweiten Objekt und aus einer relativen Phasenlage des zweiten Signals zu dem ersten Oszillator am ersten Objekt, insbesondere durch deren Addition, gewonnen. Mit besonderem Vorteil ist die erste Phaseninformationen durch eine relative Phasenlage des ersten Signals zu einem ersten Oszillator am ersten Objekt und eine relative Phasenlage des ersten Signals zu einem zweiten Oszillator am zweiten Objekt, insbesondere durch deren Addition, gegeben und/oder ist die zweite Phaseninformationen durch eine relative Phasenlage des zweiten Signals zu dem zweiten Oszillator am zweiten Objekt und eine relative Phasenlage des zweiten Signals zu dem ersten Oszillator am ersten Objekt, insbesondere durch deren Addition, gegeben.

Mit Vorteil wird ein Testobjekt, das das erste oder zweite Objekt ist und dass insbesondere eines ist, das nur eine erste oder zweite Antenne aufweist, gedreht und/oder geschwenkt, während die Schritte a bis d vielfach durchgeführt werden und wird dabei vielfach die relative vermeintliche Geschwindigkeit zwischen dem ersten und zweiten Objekt bestimmt, wobei insbesondere die relative und/oder absolute Lage und/oder Orientierung des Testobjekts beim Senden und/oder Empfangen des ersten und/oder zweiten Signals am Testobjekt erfasst wird und/ oder in Korrelation zu der Zeit der vielfachen Durchführung der Schritte a bis d. Eine solche Erfassung in Korrelation kann beispielsweise dadurch erfolgen, dass die Orientierung und/oder Lage in Abhängigkeit der Zeit erfasst wird und erfasst wird, zu welchen Zeitpunkten das Senden und/Empfangen der vielfachen Ausführungen der Schritte a bis d erfolgt. Das Objekt, auch Referenzobjekt, aus dem ersten und zweiten Objekt, das nicht das Testobjekt darstellt, ruht dabei zumindest in Bezug auf seine Orientierung im Raum und/oder abgesehen von maximal translativen Bewegungen. Das Referenzobjekt weist dabei insbesondere mehr als eine erste oder zweite Antenne auf. Insbesondere wird dabei ermittelt, bei welcher und/oder welchen Lage(n) und/oder Orientierung(en) die vermeintliche Geschwindigkeit und/oder ihr Betrag minimal und/oder maximal ist. Daraus und/oder durch eine Regression oder Regressionsanalyse über die vermeintlichen Geschwindigkeiten lässt sich die Orientierung des Testobjektes relativ zum Referenzobjekt direkt ableiten. Dazu, insbesondere zur Erfassung der Orientierung des Testobjekts, wird insbesondere mindestens ein Inertialsensor und/oder Rotationssensor und/oder Beschleunigungssensor und/oder Kompass im und/oder am Testobjekt verwendet, um die Orientierung des Testobjekts im Raum kontinuierlich zu ermitteln und zu erfassen, bei welcher Orientierung die ersten und/oder zweiten Signale am Testobjekt empfangen und/oder gesendet werden. Durch Ermitteln der Minima der vermeintlichen Geschwindigkeit und/oder Maxima der vermeintlichen Geschwindigkeit und/oder durch einen Fit und/oder eine Regression über die vermeintlichen Geschwindigkeiten und/oder ihren Betrag kann die Orientierung des Testobjekts relativ zum Referenzobjekt, insbesondere zu den Zeitpunkten des Sendens und/oder Empfangens der ersten und/oder zweiten Signale am Testobjekt ermittelt werden. Insbesondere werden beim Drehen und/oder Schwenken und/oder pro Umdrehung des Testobjekts mindestens zehn Ausführungen der Schritte a bis d durchgeführt. Mit besonderem Vorteil wird die Orientierung des Testobjekts durch das Drehen und/oder Schwenken um mindestens 60°, insbesondere um mindestens 120° um mindestens einen Raumwinkel gedreht.

Mit Vorteil ist die vermeintliche Geschwindigkeit und/oder die Geschwindigkeit der Bewegung des ersten und zweiten Objekts aufeinander zu und/oder voneinander weg kleiner oder gleich einem Viertel der größten Wellenlänge der ersten und zweiten Signale zweier aufeinander folgenden Ausführungen der Schritte a bis d dividiert durch die Zeit zwischen den Enden der zwei aufeinander folgenden Ausführungen der Schritte a bis d und/oder den Anfängen der zwei aufeinander folgenden Ausführungen der Schritte a bis d, insbesondere kleiner oder gleich dem Werte, den man erhält, wenn man das Ergebnis noch einmal dividiert durch zwei.

Mit Vorteil wird die Entfernung zwischen den Objekten und/oder werden die Frequenzen und/oder Wellenlängen der ersten und zweiten Signale zweier aufeinander folgenden Ausführungen und/oder die Zeit zwischen den Enden zweier aufeinander folgenden Ausführungen der Schritte a bis d und/oder zwischen den Enden der zwei aufeinanderfolgenden Ausführungen und/oder und/oder zwischen den Anfängen zweier aufeinander folgenden Ausführungen der Schritte a bis d und/oder zwischen den Anfängen der zwei aufeinander folgenden Ausführungen der Schritte a bis d so gewählt, dass die vermeintliche Geschwindigkeit und/oder die Geschwindigkeit der Bewegung des ersten und zweiten Objekts aufeinander zu und/oder voneinander weg kleiner oder gleich einem Viertel der größten Wellenlängen der ersten und zweiten Signale der zwei aufeinander folgenden Ausführungen der Schritte a bis d dividiert durch die Zeit zwischen den Enden der zwei aufeinander folgenden Ausführungen der Schritte a bis d und/oder zwischen den Anfängen der zwei aufeinander folgenden Ausführungen der Schritte a bis d ist, insbesondere dividiert durch das Doppelte der Zeit.

Bei einer solchen Ausgestaltungen lässt sich eine besonders robuste, fehlerunanfällige und genaue Ausgestaltung erreichen.

Vorteilhafterweise werden die Frequenz der ersten Signale und der zweiten Signale einander angeglichen, insbesondere durch Austausch elektromagnetischer Signale zwischen dem ersten und/oder zweiten Objekt, insbesondere unter Anpassen an die Frequenz der empfangenen elektromagnetischen Signale, insbesondere unter der Annahme, dass keine Dopplerverschiebung vorliegt und/oder unter Anpassen an die Frequenz der empfangenen elektromagnetischen Signale nach Korrektur der Frequenz um eine Dopplerverschiebung durch eine zuvor ermittelte vermeintliche Geschwindigkeit und/oder durch eine bekannte oder ermittelte Geschwindigkeit und/oder Mindestgeschwindigkeit.

Insbesondere handelt es sich bei dem ersten und/oder zweiten Signal um ein Bluetooth-, Wifi-, DECT-, Mobilfunk- (GSM-, UMTS-, LTE- und/oder 5G-) Signal.

Gelöst wird die Aufgabe auch durch ein System zur hochauflösenden Bestimmung einer Entfernung zwischen einem ersten Objekt und einem zweiten Objekt mittels zwischen dem ersten und dem zweiten Objekt übertragender elektromagnetischer Signale, umfassend das erste und das zweite Objekt, wobei das erste Objekt mindestens eine erste Antenne und/oder das zweite Objekt mindestens eine zweite Antenne aufweist und insbesondere umfassend jeweils mindestens eine Antenne, mindestens einen Oszillator, mindestens einen Analog-Dgital-Wandler, Mischer, Umschalter für die Umschaltung zwischen mehreren Antennen, eine CPU, einen Speicher, Auswerteeinheit, Eingangsverstärker, Ausgangsverstärker, Bandfilter, mindestens einen Timer und/oder eine Software, insbesondere in einem Speicher, wobei die Software im ersten Objekt und im zweiten Objekt insbesondere so ausgebildet sind, dass sie bei Ausführung durch jeweils eine CPU am ersten und am zweiten Objekt das erfindungsgemäße Verfahren durchführen. Das System stellt und/oder die Objekte stellen jeweils ein Hardware und Softwaresystem dar. Insbesondere ist ein erstes der zwei Objekte tragbar und insbesondere ein Mobiltelefon und/oder ist das andere der zwei Objekte ein zumindest für den Zeitraum der Messung ortsfestes, insbesondere ortsfest.

Insbesondere handelt es sich bei dem System um ein Bluetooth-, Wifi-, DECT-, Mobilfunk(GSM, UMTS, LTE und/oder 5G)-System.

Erfindungsgemäß umfasst das System mindestens eine Steuerungsvorrichtung am ersten Objekt und eine Steuerungsvorrichtung am zweiten Objekt und mindestens eine Auswerteeinheit, insbesondere am ersten Objekt und/oder Testobjekt, beinhaltend eine CPU und einen Speicher, insbesondere am ersten und/oder zweiten Objekt, wobei die erste Steuerungseinrichtung eingerichtet ist zum vielfachen Bewirkens des

    a. Sendens eines ersten Signals mit einer ersten Frequenz vom ersten Objekt aus mit der mindestens einen ersten Antenne
    und

    d. Empfangen eines zweiten Signals am ersten Objekt mit der mindestens einen ersten Antenne
    und wobei die zweite Steuerungseinrichtung eingerichtet ist zum vielfachen Bewirkens des

    c. Senden des zweiten Signals mit einer zweiten Frequenz vom zweiten Objekt aus mit der mindestens einen zweiten Antenne und

    b. Empfangen des ersten Signals am zweiten Objekt mit der mindestens einen zweiten Antenne.

Die Steuerungseinrichtungen können Teil der mindestens einen Auswerteeinheit sein, sich mit ihr, eine CPU und/oder einen Speicher teilen, oder gemeinsam mit ihr durch realisiert sein, beispielsweise in gemeinsamer Hardware implementiert sein.

Erfindungsgemäß ist die mindestens ein eine Auswerteeinheit eingerichtet zum Bereitstellen je erstem Signal und/oder je Ausführung der Schritte a bis d mindestens einer aus und/oder mittels mindestens einer ermittelten Phasenlage des empfangen ersten Signals ermittelten ersten Phaseninformation und zum Bereitstellen je zweitem Signal und/oder je Ausführung der Schritte a bis d mindestens einer aus und/oder mittels mindestens einer ermittelten Phasenlage des empfangen zweiten Signals ermittelten zweiten Phaseninformation und Erfindungsgemäß ist die mindestens eine Auswerteeinheit eingerichtet ein Messwertobjekt aus den ersten und zweiten Phaseninformationen und mindestens einer Amplitude je erster und/oder zweiter Phaseninformation und/oder je Ausführung der Schritte a bis d zu bilden. Erfindungsgemäß ist die mindestens eine Auswerteeinheit eingerichtet, eine vermeintliche Entfernung und/oder vermeintliche, insbesondere relative, Geschwindigkeit zwischen erstem und zweitem Objekt aus dem Messwertobjekt zu ermitteln, wobei die vermeintliche Geschwindigkeit eine Geschwindigkeit ist, mit der sich die Objekte aufeinander zu bewegen und/oder voneinander weg bewegen, wobei die Ermittlung einer vermeintlichen Entfernung und/oder vermeintlichen relativen Geschwindigkeit zwischen erstem und zweitem Objekt aus dem Messwertobjekt durch Vergleich des Messwertobjekts mit einer Menge und/oder Auswahl gespeicherter und/oder errechneter Referenzmesswertobjekte betreffend unterschiedliche Entfernungen und unterschiedliche relative Geschwindigkeiten, wobei jedes Referenzmesswertobjekt einer Entfernungen und einer Geschwindigkeiten zugeordnet ist, erfolgt, wobei die vermeintliche Entfernung als die Entfernung angenommen wird, die dem gespeicherten und/oder errechneten Referenzmesswertobjekt zugeordnet ist, das am besten zu dem Messwertobjekt passt, den geringsten Abstand zu ihm aufweist und/oder ihm am ähnlichsten ist und/oder die vermeintliche relative Geschwindigkeit als die Geschwindigkeit angenommen wird, die dem gespeicherten und/oder errechneten Referenzmesswertobjekt zugeordnet ist, das am besten zu dem Messwertobjekt passt, den geringsten Abstand zu ihm aufweist und/oder ihm am ähnlichsten ist.

In Bezug auf Ausgestaltung, Ermittlung und/oder Bereitstellen einzelner Aspekte und/oder Ausgestaltungen, insbesondere insbesondere in Bezug auf Messwertobjekt, Referenzmesswertobjekte, Menge und/oder Auswahl gespeicherter und/oder errechneter Referenzmesswertobjekte, Phaseninformation und/oder erstes und/oder zweites Signal und/oder deren Erzeugung und/oder in Bezug auf Ermittlung einer vermeintlichen Entfernung und/oder vermeintlichen relativen Geschwindigkeit, Ähnlichkeit und/oder Abstand gilt insbesondere oben ausgeführtes entsprechend.

Weitere vorteilhafte Ausbildungen sollen rein exemplarisch anhand der nachfolgenden schematischen Figur geschildert werden.

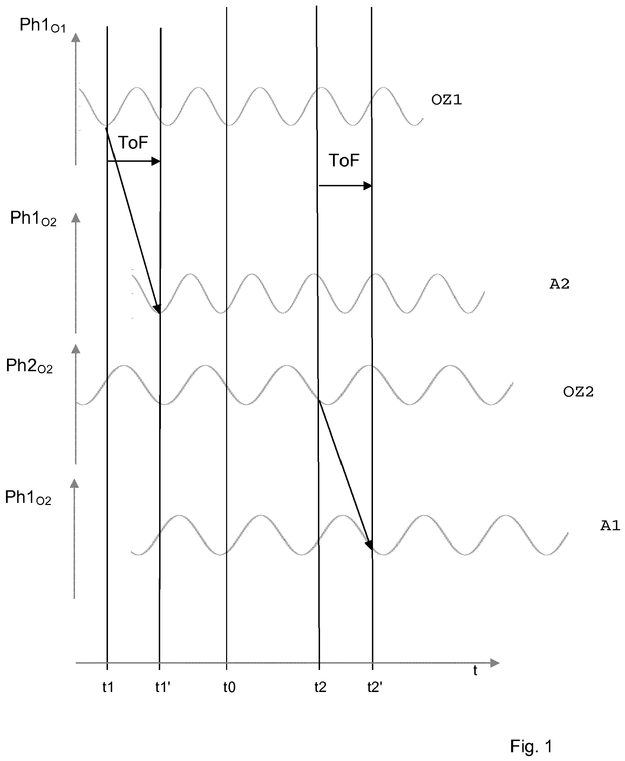

Figur 1 zeigt eine Veranschaulichung der Phasenlagen und Zeiten bei einer Ausführung der Schritte a bis d mit zwei ortsfesten Objekten O1 und O2. Dargestellt sind auf einer gemeinsamen Zeitachse die Phasenlage $Ph1_{O1}$ der Oszillation eines ersten Oszillators OZ1 am ersten Objekt O1 und die Phasenlage $Ph1_{O2}$ des mit einer zweiten Antenne A2 empfangen Signals des ersten Oszillators OZ1 am zweiten Objekt O2 und die Phasenlage $Ph2_{O2}$ der Oszillationen eines zweiten Oszillators OZ2 am zweiten Objekt O2 und die Phasenlage $Ph2_{O1}$ des mit einer ersten Antenne A1 empfangen Signals des zweiten Oszillators OZ2 am ersten Objekt O1.

Die Übertragung ist durch jeweils einen schrägen Pfeil gekennzeichnet, die Flugzeit ToF der Signale ist jeweils mit einem vertikalen Pfeil gekennzeichnet t0, t1, t1', t2, t2' stellen Zeitpunkte dar. Zum Zeitpunkt t0 weisen die Oszillatoren einen Phasenversatz von dPht0 auf. Auf Grund unterschiedlicher Frequenzen F1, F2 der Oszillatoren verändert sich der Phasenunterschied im Zeitverlauf.

Nimmt man an, dass (t2 - t1) > > (t1' - t1) und (t2 - t1) > > (t2' - t2), beispielsweise (t2 - t1) > 5 x (t1' - t1) und (t2 - t1) > 5x (t2' - t2) und ergibt sich näherungsweise:

$$Ph1O2(t1') \quad = 2\pi * F * D / c + dPht0 + (t1 - t0) * (F2 - F1)$$

und

$$Ph2O1(t2') \quad = 2\pi * F * D / c - dPht0 + (t2 - t0) * (F1 - F2)$$

wobei D die Entfernung zwischen O1 und O2 darstellt, c die Lichtgeschwindigkeit und Ph1O2(t1') die Phasenlage der Phase des ersten Signals am zweiten Objekt zur Zeit t1' und Ph2O1 (t2') die Phasenlage der Phase des zweiten Signals am ersten Objekt zur Zeit t2' und F den Mittelwert von F1 und F2 (F = min(F1, F2)) darstellt.

Die Addition führt zu

$$Ph1O2\ (t1') + Ph2O1(t2') = 2\pi * F * D / c + dPht0 + (t1 - t0) * (F2 - F1) + 2\pi * F * D / c - dPht0 + (t2 - t0) * (F1 - F2)$$

$$Ph1O2\ (t1') + Ph2O1\ (t2') = 2\pi * F * D / c + (t1 - t0) * (F2 - F1) + 2\pi * F * D / c + (t2 - t0) * (F1 - F2)$$

$$Ph1O2\ (t1') + Ph2O1\ (t2') = (2\pi * F) * 2 * D / c + (t1 - t0) * (F2 - F1) - (t2 - t0) * (F2 - F1)$$

$$Ph1O2\ (t1') + Ph2O1\ (t2') = (2\pi * F) * 2 * D / c + (t1 - t0 - t2 + t0) * (F2 - F1)$$

$$Ph1O2\ (t1') + Ph2O1\ (t2') = (2\pi * F) * 2 * D / c + (t1 - t2) * (F2 - F1)$$

$$2 * D = ((Ph1O2\ (t1') + Ph2O1\ (t2')) - (t1 - t2) * (F2 - F1)) * c / (2\pi * F)$$

Mit cPhSum als theoretische Phasenlage als Addition erster und zweiter theoretischer Phasenlage als:

$$cPhSum = ((Ph1O2\ (t1') + Ph2O1\ (t2')) - (t1 - t2) * (F2 - F1))$$

ergibt sich:

$$2 * D = cPhSum * c / (2\pi * F)$$

Unter Verwendung mehrerer Antennenkombinationen erster und zweiter Antennen und vielfacher Ausführung der Schritte a bis d kann eine Messwertmatrix mit komplexen Messzahlen erstellt werden. Durch bilden der Autokorrelationsmatrix kann ein Messwertobjekt erstellt werden. Unter Verwendung von Referenzobjekten, kann der Abstand und die Geschwindigkeit zwischen den Objekten ermittelt werden.

Dabei lässt sich unter der weiteren Annehme, dass der Frequenzunterschied zwischen zwei Ausführung der Schritte a bis d wesentlich, insbesondere mindestens 5 mal, größer ist als der Frequenzunterschied zwischen dem ersten Signal und dem zweiten Signal der ersten oder jeder Ausführung der Schritte a bis d und wesentlich, insbesondere mindestens 5 mal, größer ist als der Frequenzunterschied zwischen dem ersten Signal und dem zweiten Signal der zweiten Ausführung der Schritte a bis d mit den Frequenzen FA1 und FA2 der ersten Ausführung und den Frequenzen FB1 und FB2 der zweiten Ausführungen anstelle von F1 und F2 oben und mit FA = Mittelwert (FA1, FA2) und FB = Mittelwert (FB1, FB2) und mit

$$2 * D = cPhSum.A * c / (2\pi * FA)$$

$$2 * D = cPhSum.B * c / (2\pi * FB)$$

näherungsweise finden:

$$2 * D = (cPhSum.A - cPhSum.B) * c / (2\pi * (FA - FB))$$

Dabei ist cPhSum.A cPhSum der ersten Ausführung und cPhSum.B cPhSum der zweiten Ausführung.

Sofern man also die Entfernung oder die Frequenzschritte zwischen den Ausführungen der Schritte a bis d ausreichend klein hält, lässt sich auch die 2 $\pi$ Mehrdeutigkeit vermeiden.

**Patentansprüche**

1.  Verfahren zur hochauflösenden Bestimmung einer Entfernung zwischen einem ersten Objekt (O1) und einem zweiten Objekt (O2), mittels zwischen dem ersten und dem zweiten Objekt übertragender elektromagnetischer Signale, umfassend
    vielfaches Ausführen der folgenden Schritte a bis d mit unterschiedlichen ersten und unterschiedlichen zweiten Frequenzen:

    a. Senden eines ersten Signals mit einer ersten Frequenz vom ersten Objekt aus mit mindestens einer ersten Antenne
    b. Empfangen des ersten Signals am zweiten Objekt mit mindestens einer zweiten Antennen
    c. Senden eines zweiten Signals mit einer zweiten Frequenz vom zweiten Objekt aus mit der mindestens einen zweiten Antenne
    d. Empfangen des zweiten Signals am ersten Objekt mit der mindestens einen ersten Antenne und

    Bereitstellen je erstem Signal und/oder je Ausführung der Schritte a bis d mindestens einer aus und/oder mittels mindestens einer ermittelten Phasenlage des empfangen ersten Signals ermittelten ersten Phaseninformation und Bereitstellen je zweitem Signal und/oder je Ausführung der Schritte a bis d mindestens einer aus und/oder mittels mindestens einer ermittelten Phasenlage des empfangen zweiten Signals ermittelten zweiten Phaseninformation und
    Bilden eines Messwertobjekts aus den ersten und zweiten Phaseninformationen und mindestens einer Amplitude je erster und/oder zweiter Phaseninformation und/oder je Ausführung der Schritte a bis d und
    Ermittlung einer vermeintlichen Entfernung und/oder vermeintlichen Geschwindigkeit zwischen erstem und zweitem Objekt aus dem Messwertobjekt, wobei die vermeintlichen Geschwindigkeit eine Geschwindigkeit ist, mit der sich die Objekte aufeinander zu bewegen und/oder voneinander weg bewegen, wobei die Ermittlung einer vermeintlichen Entfernung und/oder vermeintlichen relativen Geschwindigkeit zwischen erstem und zweitem Objekt aus dem Messwertobjekt durch Vergleich des Messwertobjekts mit einer Menge und/oder Auswahl gespeicherter und/oder errechneter Referenzmesswertobjekte betreffend unterschiedliche Entfernungen und unterschiedliche relative Geschwindigkeiten, wobei jedes Referenzmesswertobjekt einer Entfernungen und einer Geschwindigkeiten zugeordnet ist, erfolgt, wobei die vermeintliche Entfernung als die Entfernung angenommen wird, die dem gespeicherten und/oder errechneten Referenzmesswertobjekt zugeordnet ist, das am besten zu dem Messwertobjekt passt, den geringsten Abstand zu ihm aufweist und/oder diesem am ähnlichsten ist und/oder die vermeintliche relative Geschwindigkeit als die Geschwindigkeit angenommen wird, die dem gespeicherten und/oder errechneten Referenzmesswertobjekt zugeordnet ist, das am besten zu dem Messwertobjekt passt, den geringsten Abstand zu ihm aufweist und/oder diesem am ähnlichsten ist

2.  Verfahren nach einem der vorstehenden Ansprüche, wobei jede erste Phaseninformation gewonnen wird mittels Bestimmung der Frequenzen des jeweiligen ersten Signals und des jeweiligen zweiten Signals am zweiten Objekt und/oder der Frequenzdifferenz zwischen dem jeweiligen ersten Signal und dem jeweiligen zweiten Signal am zweiten Objekt und berechnen einer theoretischen Phasenlage zwischen jeweiligen erstem und jeweiligen zweitem Signal am zweiten Objekt zu einem fiktiven Zeitpunkt je erstem Signal und/oder je Ausführung der Schritte a bis d und/oder wobei jede zweite Phaseninformation gewonnen wird mittels Bestimmung der Frequenzen des jeweiligen zweiten Signals und des jeweiligen ersten Signals am ersten Objekt und/oder der Frequenzdifferenz zwischen dem jeweiligen zweiten Signal und dem jeweiligen ersten Signal am ersten Objekt und berechnen einer theoretischen Phasenlage zwischen jeweiligem ersten und jeweiligem zweiten Signal am ersten Objekt zu dem fiktiven Zeitpunkt je erstem Signal und/oder je Ausführung der Schritte a bis d.

3.  Verfahren nach einem der vorstehenden Ansprüche, wobei die Phaseninformationen Phasenlagen beinhalten und/oder sind und/oder das Bearbeiten des Messwertobjekts das Addieren und/oder Subtrahieren der ersten und der zweiten Phaseninformation je Ausführung der Schritte a bis d, insbesondere ihrer Phasenlagen, und Halbieren der addierten Phaseninformationen beinhaltet.

4. Verfahren nach einem der vorstehenden Ansprüche, wobei die Messwertobjekte die Phaseninformationen und die Amplitude der empfangenen ersten und/oder zweiten Signale beinhalten.

5. Verfahren nach einem der vorstehenden Ansprüche, wobei die ersten Signale gleich oder ungleich und/oder die zweiten Signale gleich oder ungleich sind.

6. Verfahren nach einem der vorstehenden Ansprüche, wobei das Verfahren das Übermitteln und/oder die Nutzung der Frequenzdifferenzen jeweils zwischen der ersten und der zweiten Frequenz am ersten und/oder am zweiten Objekt und/oder der ersten und/oder zweiten Frequenzen am ersten und/oder zweiten Objekt zur Bearbeitung des Messwertobjekts und/oder zur Ermittlung der vermeintlichen Entfernung und/oder vermeintlichen relativen Geschwindigkeit beinhaltet.

7. Verfahren nach einem der vorstehenden Ansprüche, wobei die Messwertobjekte aus mindestens einem Vektor mit komplexen Zahlen gebildet werden, insbesondere aus mindestens zwei Vektoren, insbesondere durch Bilden einer Matrix, insbesondere durch Verwenden der Vektoren als Spalten oder Zeilen der Matrix, insbesondere durch Bilden einer Autokorrelationsmatrix, insbesondere der Matrix.

8. Verfahren nach einem der vorstehenden Ansprüche, wobei das Messwertobjekts vor dem Vergleich mit den Referenzmesswertobjekten zur Entfernung und/oder Verringerung der Auswirkungen von Phasensprüngen und/oder Multipathumgebungen und/oder Umwelteinflüssen und/oder Messfehlern und/oder Reduzierung der Dimension des Messwertobjekts bearbeitet wird

9. Verfahren nach einem der vorstehenden Ansprüche, wobei die Bearbeitung des Messwertobjekts das Reduzieren der Dimension ist und/oder beinhaltet, insbesondere auf Basis der Eigenwerte.

10. Verfahren nach einem der vorstehenden Ansprüche, wobei die Bearbeitung des Messwertobjekts das Bearbeiten der beinhalten Phaseninformation oder beinhalteten Phasenlagen beinhaltet, insbesondere durch Halbierung der Phaseninformation oder Phasenlagen , insbesondere aller Phaseninformation oder Phasenlagen einer der Ausführungen der Schritte a bis d, und/oder Verschiebung um 180° zumindest einiger der Phaseninformation oder Phasenlagen, insbesondere aller Phaseninformation oder Phasenlagen einer der Ausführungen der Schritte a bis d.

11. Verfahren nach einem der vorstehenden Ansprüche, wobei mindestens zwei erste und/oder mindestens zwei zweite Antennen zum Empfang verwendet werden und wobei die ersten Phaseninformation je erstem Signal aus mindestens zwei ermittelten Phasenlage des empfangen ersten Signals besteht und/oder ermittelt wird und/oder die zweite Phaseninformation je zweitem Signal aus mindestens zwei ermittelten Phasenlage des empfangen zweiten Signals besteht und/oder ermittelt wird.

12. Verfahren nach einem der vorstehenden Ansprüche, wobei ein Testobjekt aus erstem und zweitem Objekt bewegt, gedreht und/oder geschwenkt wird, während die Schritte a bis d vielfach durchgeführt werden und vielfach die relative vermeintliche Geschwindigkeit zwischen dem ersten und zweiten Objekt bestimmt wird und wobei insbesondere die relative und/oder absolute Lage und/oder Orientierung des Testobjekts erfasst wird, insbesondere in Korrelation zu der Zeit der vielfachen Durchführung der Schritte a bis d.

13. Verfahren nach einem der vorstehenden Ansprüche, wobei die vermeintliche Geschwindigkeit kleiner und/oder gleich ist als ein Viertel der größten Wellenlänge der ersten und zweiten Signale dividiert durch die Zeit zwischen den Enden und/oder der Anfängen zweier Ausführungen der Schritte a bis d.

14. Verfahren nach einem der vorstehenden Ansprüche, wobei die Frequenz der ersten Signale und der zweiten Signale einer Ausführung der Schritte a bis d einander angeglichen werden, insbesondere bezüglich jeder Ausführung der Schritte a bis d erste und zweite Frequenz der jeweiligen Ausführung aneinander angeglichen werden.

15. System zur hochauflösenden Bestimmung einer Entfernung zwischen einem ersten Objekt (O1) und einem zweiten Objekt (O2), mittels zwischen dem ersten und dem zweiten Objekt übertragender elektromagnetischer Signale, umfassend das erste und das zweite Objekt, wobei das erste Objekt mindestens eine erste Antenne und/oder das zweite Objekt mindestens eine zweite Antenne aufweist umfassend mindestens eine Steuerungsvorrichtung am ersten Objekt und eine Steuerungsvorrichtung am zweiten Objekt und mindestens eine Auswerteeinheit beinhaltend eine CPU und einen Speicher, wobei die erste Steuerungseinrichtung eingerichtet ist zum vielfachen Bewirkens des

a. Sendens eines ersten Signals mit einer ersten Frequenz vom ersten Objekt aus mit der mindestens einen ersten Antenne
und
b. Empfangen eines zweiten Signals am ersten Objekt mit der mindestens einen ersten Antenne
und wobei die zweite Steuerungseinrichtung eingerichtet ist zum vielfachen Bewirkens des
c. Senden des zweiten Signals mit einer zweiten Frequenz vom zweiten Objekt aus mit der mindestens einen zweiten Antenne und
d. Empfangen des ersten Signals am zweiten Objekt mit der mindestens einen zweiten Antenne

und wobei die mindestens eine Auswerteeinheit eingerichtet ist zum Bereitstellen je erstem Signal und/oder je Ausführung der Schritte a bis d mindestens einer aus und/oder mittels mindestens einer ermittelten Phasenlage des empfangen ersten Signals ermittelten ersten Phaseninformation und
Bereitstellen je zweitem Signal und/oder je Ausführung der Schritte a bis d mindestens einer aus und/oder mittels mindestens einer ermittelten Phasenlage des empfangen zweiten Signals ermittelten zweiten Phaseninformation und
Bilden eines Messwertobjekts aus den ersten und zweiten Phaseninformationen und mindestens einer Amplitude je erster und/oder zweiter Phaseninformation und/oder je Ausführung der Schritte a bis d und
Ermittlung einer vermeintlichen Entfernung und/oder vermeintlichen relativen Geschwindigkeit zwischen erstem und zweitem Objekt aus dem Messwertobjekt, wobei die vermeintliche Geschwindigkeit eine Geschwindigkeit ist, mit der sich die Objekte aufeinander zu bewegen und/oder voneinander weg bewegen, wobei die Ermittlung einer vermeintlichen Entfernung und/oder vermeintlichen Geschwindigkeit zwischen erstem und zweitem Objekt aus dem Messwertobjekt durch Vergleich des Messwertobjekts mit einer Menge und/oder Auswahl gespeicherter und/oder errechneter Referenzmesswertobjekte betreffend unterschiedliche Entfernungen und unterschiedliche relative Geschwindigkeiten, wobei jedes Referenzmesswertobjekt einer Entfernungen und einer Geschwindigkeiten zugeordnet ist, erfolgt, wobei die vermeintliche Entfernung als die Entfernung angenommen wird, die dem gespeicherten und/oder errechneten Referenzmesswertobjekt zugeordnet ist, das am besten zu dem Messwertobjekt passt, den geringsten Abstand zu ihm aufweist und/oder diesem am ähnlichsten ist und/oder die vermeintliche relative Geschwindigkeit als die Geschwindigkeit angenommen wird, die dem gespeicherten und/oder errechneten Referenzmesswertobjekt zugeordnet ist, das am besten zu dem Messwertobjekt passt, den geringsten Abstand zu ihm aufweist und/oder diesem am ähnlichsten ist.

Fig. 1

Europäisches
Patentamt

European
Patent Office

Office européen
des brevets

**EUROPÄISCHER RECHERCHENBERICHT**

Nummer der Anmeldung

EP 18 17 1965

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2009 060592 A1 (ATMEL AUTOMOTIVE GMBH [DE]) 8. Juli 2010 (2010-07-08)<br>* Zusammenfassung *<br>* Absatz [0001] - Absatz [0020] *<br>* Absatz [0041] - Absatz [0042] *<br>* Absatz [0048] *<br>* Absatz [0062] - Absatz [0065] *<br>* Absatz [0077] - Absatz [0080] *<br>* Absatz [0088] - Absatz [0092] *<br>----- | 1-15 | INV.<br>G01S11/02<br>G01S13/84 |
| A,D | EP 2 196 823 A1 (LAMBDA 4 ENTWICKLUNGEN GMBH [DE]) 16. Juni 2010 (2010-06-16)<br>* Zusammenfassung *<br>* Absatz [0001] *<br>* Absatz [0011] *<br>* Absatz [0017] *<br>* Absatz [0025] *<br>* Absatz [0030] *<br>* Absatz [0032] *<br>* Absatz [0037] - Absatz [0039] *<br>* Absatz [0046] *<br>----- | 1-15 | |
| A | WO 03/081516 A1 (SIEMENS AG [DE]; KONRAD WOLFGANG [AT]; GILA JANOS [AT]; HOFBECK KLAUS) 2. Oktober 2003 (2003-10-02)<br>* Zusammenfassung *<br>* Seite 4, Zeile 35 - Seite 5, Zeile 16 *<br>----- | 1-15 | **RECHERCHIERTE SACHGEBIETE (IPC)**<br><br>G01S |

Der vorliegende Recherchenbericht wurde für alle Patentansprüche erstellt

| Recherchenort | Abschlußdatum der Recherche | Prüfer |
|---|---|---|
| München | 30. November 2018 | Haugg, Sabine |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 17 1965

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-11-2018

| Im Recherchenbericht angeführtes Patentdokument | Datum der Veröffentlichung | Mitglied(er) der Patentfamilie | Datum der Veröffentlichung |
|---|---|---|---|
| DE 102009060592 A1 | 08-07-2010 | CN 101825706 A<br>DE 102009060592 A1<br>US 2011006942 A1<br>US 2013288611 A1<br>US 2016178744 A1 | 08-09-2010<br>08-07-2010<br>13-01-2011<br>31-10-2013<br>23-06-2016 |
| EP 2196823 A1 | 16-06-2010 | AT 513229 T<br>EP 2196823 A1 | 15-07-2011<br>16-06-2010 |
| WO 03081516 A1 | 02-10-2003 | DE 10212648 A1<br>EP 1485859 A1<br>JP 2005528016 A<br>US 2005038574 A1<br>WO 03081516 A1 | 09-10-2003<br>15-12-2004<br>15-09-2005<br>17-02-2005<br>02-10-2003 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 2196823 A